# EUROPÄISCHE PATENTSCHRIFT

(11) **EP 3 555 712 B1**
(45) Veröffentlichungstag und Bekanntmachung des Hinweises auf die Patenterteilung: **08.04.2020**
(21) Anmeldenummer: 18702257.9
(22) Anmeldetag: 29.01.2018
(51) Int. Cl.: G05B 15/02

(54) **STEUERELEKTRONIK FÜR MEHRERE ELEKTROFILTER**
CONTROL ELECTRONICS FOR MULTIPLE ELECTRIC FILTERS
ÉLECTRONIQUE DE COMMANDE POUR PLUSIEURS FILTRES ÉLECTROSTATIQUES

(30) Priorität: 30.01.2017 CH 962017
(43) Veröffentlichungstag der Anmeldung: 23.10.2019
(73) Patentinhaber: Clean Air Enterprise AG, 6343 Holzhaeusern ZG (CH)
(72) Erfinder: OBERHAENSLI, Rene, 6314 Unteraegeri (CH)
(74) Vertreter: Falk, Urs
(86) Internationale Anmeldenummer: PCT/EP2018/052090
(87) Internationale Veröffentlichungsnummer: WO 2018/138315

(56) Entgegenhaltungen:
- US-A1- 2016 363 332

## Beschreibung

### Technisches Gebiet

Die Erfindung betrifft eine Steuerelektronik für die Elektrofilter einer Gebäudelüftungsanlage eines grösseren Gebäudes. Solche Gebäudelüftungsanlagen werden in der Klima- und Lüftungsbranche auch als Monobloc bezeichnet.

### Hintergrund der Erfindung

Elektrofilter können in einem Gas- oder Luftstrom enthaltene Partikel herausfiltern. Sie können zwar in Lüftungsgeräten, Klimageräten und Klimaanlagen eingesetzt werden, jedoch haben sie sich in der Lüftungsbranche nicht durchgesetzt. In der Lüftungsbranche werden, insbesondere in Gebäudelüftungsanlagen, noch immer Taschenfilter eingesetzt. In einem Monobloc sind je nach Grösse des Gebäudes eine unterschiedliche Anzahl von Taschenfiltern nebeneinander und übereinander angeordnet. Wenn die Taschenfilter durch Elektrofilter gleicher Baugrösse ersetzt werden, dann wird eine Steuerelektronik benötigt, die eine Vielzahl von Elektrofiltern steuern kann. US2016/0363332 beschreibt eine Steuerelektronik für Elektrofilter einer Gebäudelüftungsanlage.

Der Erfindung liegt die Aufgabe zugrunde, eine Steuerelektronik für eine Vielzahl von Elektrofiltern zu entwickeln, die neben der Erfüllung ihrer Hauptaufgabe, nämlich der Steuerung der Elektrofilter, eine einfache Montage und Wartung, inklusive einfachem Austausch und Ersatz defekter Teile ermöglicht.

### Kurze Beschreibung der Erfindung

Die genannte Aufgabe wird erfindungsgemäss gelöst durch die Merkmale des Anspruchs 1. Vorteilhafte Ausführungen sind in den abhängen Ansprüchen 2-5 angegeben.

Die Erfindung betrifft eine Steuerelektronik für mehrere Elektrofilter, die in einem Lüftungskanal einer Gebäudelüftungsanlage angeordnet sind. Die Steuerelektronik umfasst wenigstens ein Master-Gerät und Node-Geräte, wobei an jeden der Elektrofilter ein Node-Gerät anschliessbar ist. Das Master-Gerät bzw. die Master-Geräte ist/sind eine übergeordnete Steuerzentrale für die Elektrofilter und versorgt/versorgen zudem die angeschlossenen Node-Geräte mit einer Versorgungsspannung für die Elektrofilter.

Eine optimale Ausgestaltung des Master-Geräts und der Node-Geräte beinhaltet die folgenden Merkmale, die einzeln oder in Kombination verwirklicht sein können, nämlich
1. Das bzw. jedes Master-Gerät und jedes Node-Gerät weist eine Recheneinheit auf und die Geräte sind wie folgt ausgebildet: an das Master-Gerät bzw. an jedes der Master-Geräte sind eine oder mehrere Ketten von Node-Geräten anschliessbar, wobei in jeder Kette ein erstes Node-Gerät an das zugehörige Master-Gerät anschliessbar und die weiteren Node-Geräte der Kette jeweils an das Vorgänger Node-Gerät anschliessbar sind, so dass die Node-Geräte der Kette in Serie miteinander verbunden sind. Dabei ist das Master-Gerät der Vorgänger des ersten Node-Geräts der angeschlossenen Kette bzw. der ersten Node-Geräte bzw. der angeschlossenen Ketten. Jedem der Node-Geräte einer Kette ist eine eindeutige Platznummer zugeordnet. Die Recheneinheit des Master-Geräts bzw. der Master-Geräte ist eingerichtet, in einem Konfigurationsmodus die Recheneinheit des ersten Node-Geräts einer jeden angeschlossenen Kette zu veranlassen, ein Konfigurationsprogramm auszuführen, das eingerichtet ist:
   die Platznummer seines Vorgängers entgegenzunehmen und sich selbst die um den Wert 1 erhöhte Platznummer zuzuweisen und im Node-Gerät zu speichern,
   festzustellen, ob ein nachfolgendes Node-Gerät angeschlossen ist, und wenn dies der Fall ist die Recheneinheit des nachfolgenden Node-Geräts zu veranlassen, das Konfigurationsprogramm auszuführen.
2. Die Elektrofilter können eine Kodierung enthalten, die beispielsweise durch Permanentmagnete gebildet ist. Um die Kodierung zu ermitteln, weist das Node-Gerät mit Vorteil einen oder mehrere Sensoren auf und das Konfigurationsprogramm ist zusätzlich eingerichtet, aus dem Ausgangssignal des Sensors bzw. aus den Ausgangssignalen der Sensoren die Kodierung des angeschlossenen Elektrofilters zu bestimmen.
3. Jedes der Node-Geräte weist ein galvanisches Trennglied zur Übertragung der Versorgungsspannung vom Node-Gerät an den angeschlossenen Elektrofilter auf. Dies ermöglicht die Steuerung der Ionisationsstufe und der Kollektorstufe des Elektrofilters gemäss den in der PCT Anmeldung Nr. PCT/EP2018/050093 beschriebenen Prinzipien.

Die Steuerelektronik ist zudem bevorzugt eingerichtet für die Steuerung von Elektrofiltern unterschiedlicher Baugrösse, wobei jeder der Elektrofilter eine vorbestimmte Baugrösse hat und eine Ionisationsstufe und eine Kollektorstufe umfasst. Die Steuerung von jedem der Elektrofilter erfolgt insbesondere durch die Vorgabe eines durch die Ionisationsstufe fliessenden Ionisationsstroms und einer an die Kollektorstufe anzulegenden Gleichhochspannung, wobei der Ionisationsstrom insbesondere an den durch den Lüftungskanal fliessenden Luftvolumenstrom und die Baugrösse des Elektrofilters angepasst ist. Auch die an die Kollektorstufe angelegte Gleichhochspannung ist mit Vorteil an den Luftvolumenstrom angepasst.

Das bzw. jedes Master-Gerät kann an ein Gebäudesteuerungsgerät anschliessbar sein, wobei das Gebäudesteuerungsgerät ein Steuersignal an das bzw. die Master-Geräte übermittelt, das ein Mass für den durch die Lüftungsanlage fliessenden Luftvolumenstrom ist. Das bzw. die Master-Geräte kann/können auch ein Teil eines Gebäudesteuerungsgeräts sein. Das bzw. die Master-Geräte ist/sind eingerichtet, das von dem Gebäudesteuerungsgerät übermittelte Steuersignal oder ein davon abgeleitetes Steuersignal an die Node-Geräte zu übermitteln. Die Node-Geräte sind mit Vorteil eingerichtet, den Ionisationsstrom und/oder die Gleichhochspannung aufgrund des wenigstens einen Steuersignals und fakultativ weiterer Parameter wie beispielsweise der Baugrösse des Elektrofilters zu bestimmen und an den angeschlossenen Elektrofilter zu übermitteln.

Die Erfindung wird nachfolgend anhand von Ausführungsbeispielen und anhand der Zeichnung näher erläutert.

### Beschreibung der Figuren

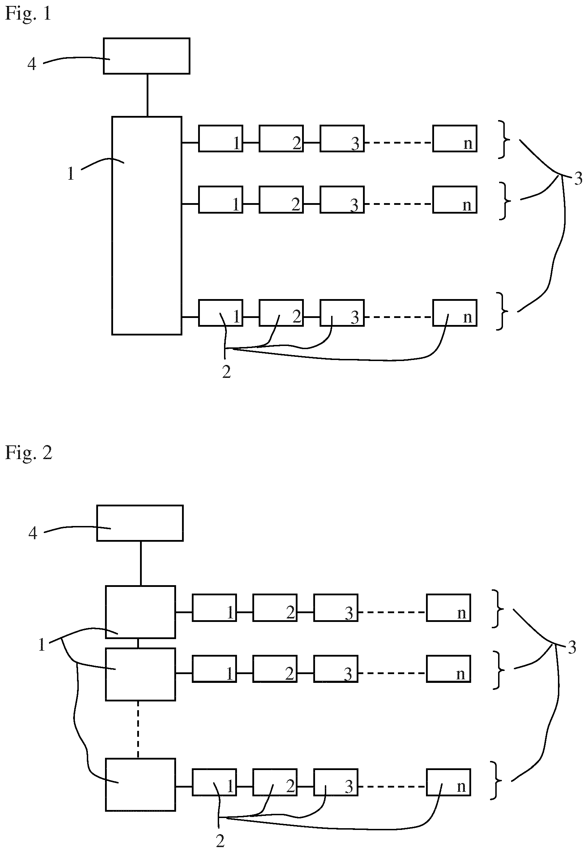

- Fig. 1-3: zeigen je ein Schema einer erfindungsgemässen Steuerelektronik für die Elektrofilter einer Gebäudelüftungsanlage.

### Detaillierte Beschreibung der Erfindung

Die Fig. 1 zeigt ein Schema einer erfindungsgemässen Steuerelektronik für die Elektrofilter einer Gebäudelüftungsanlage gemäss einem ersten Ausführungsbeispiel. Die Elektrofilter umfassen eine Ionisationsstufe und eine Kollektorstufe und ein oder zwei Hochspannungsspeisegeräte für die Versorgung der Ionisationsstufe und der Kollektorstufe mit Gleichhochspannungen. Die Steuerelektronik umfasst ein zentrales Master-Gerät 1 und pro Elektrofilter ein Node-Gerät 2. Das Node-Gerät 2 ist, vorzugsweise mittels werkzeugfrei befestigbaren und wieder lösbaren mechanischen Mitteln am zugehörigen Elektrofilter befestigbar und elektrisch anschliessbar. Es versorgt den zugehörigen Elektrofilter mit elektrischer Energie und steuert das oder die Hochspannungsspeisegeräte für die Ionisationsstufe und die Kollektorstufe des zugehörigen Elektrofilters. Das Master-Gerät 1 und jedes Node-Gerät 2 weist eine Recheneinheit auf. Die Recheneinheiten sind beispielsweise Mikrokontroller, Mikrocomputer und dergleichen.

Die Node-Geräte 2 sind über eine oder mehrere Ketten 3 an das Master-Gerät 1 angeschlossen. In jeder Kette 3 ist ein erstes Node-Gerät 2 an das Master-Gerät 1 anschliessbar und die weiteren Node-Geräte 2 sind jeweils an das Vorgänger Node-Gerät 2 anschliessbar, so dass die Node-Geräte 2 der gleichen Kette 3 in Serie miteinander verbunden sind. Das Master-Gerät 1 ist der Vorgänger des ersten Node-Geräts 2 einer Kette 3. Das Master-Gerät 1 und die Node-Geräte 2 sind über mit Steckern ausgerüstete Verbindungskabel verbunden. Die Verbindungskabel umfassen beispielsweise zwei Leitungen für die Versorgung der Node-Geräte 2 mit einer ersten Versorgungsspannung von beispielsweise 12 V, zwei weiteren Leitungen für die Versorgung der Elektrofilter mit einer zweiten Versorgungsspannung von beispielsweise 24 V oder Netzwechselspannung von beispielsweise 230 V, und eine oder mehrere Datenleitungen für die Übertragung von Daten und Befehlen. Die 12 V und die 24 V Leitungen sind vorzugsweise galvanisch voneinander getrennt. Die erste Versorgungsspannung dient zur Versorgung der Elektronik des Master-Geräts 1 und der Node-Geräte 2 mit elektrischer Energie. Die zweite Versorgungsspannung dient zur Versorgung der Elektrofilter mit elektrischer Energie.

Jedem der Node-Geräte 2 einer Kette 3 ist eine eindeutige Platznummer zugeordnet. Die Node-Geräte 2 sind, wenn sie die Fabrik verlassen, nicht konfiguriert, d.h. ihre Platznummer ist entweder noch unbestimmt oder auf einen hohen Wert festgelegt, der in der Praxis nicht vorkommt, und sie enthalten auch keinerlei auf die Gebäudeanlage bezogene Daten. Die Zuordnung der Platznummer erfolgt selbsttätig nach dem Anschliessen des Node-Geräts 2 an einen der Elektrofilter der Gebäudelüftungsanlage und dem Verbinden mit dem Master-Gerät 1 gemäss dem in der Fig. 1 dargestellten Schema, d. h. ohne dass eine Bedienperson die Platznummer zuweisen muss.

Die Konfiguration der Steuerelektronik der Elektrofilter einer Gebäudelüftungsanlage erfolgt durch ein Master-Konfigurationsprogramm, das auf der Recheneinheit des Master-Geräts 1 installiert ist, und ein Node-Konfigurationsprogramm, das auf der Recheneinheit der Node-Geräte 2 installiert ist.

Die Recheneinheit des Master-Geräts 1 ist eingerichtet, in einem Konfigurationsmodus das Master-Konfigurationsprogramm auszuführen, das die Recheneinheit des ersten Node-Geräts 2 einer jeden Kette 3 veranlasst, das Node-Konfigurationsprogramm auszuführen, wobei das Node-Konfigurationsprogramm eingerichtet ist:
die Platznummer seines Vorgängers entgegenzunehmen und dem Node-Gerät 2 die um den Wert 1 erhöhte Platznummer zuzuweisen und im Node-Gerät 2 zu speichern,
festzustellen, ob ein nachfolgendes Node-Gerät 2 angeschlossen ist, und wenn dies der Fall ist die Recheneinheit des nachfolgenden Node-Geräts 2 zu veranlassen, das Node-Konfigurationsprogramm auszuführen.
Wenn kein nachfolgendes Node-Gerät 2 vorhanden ist, dann übermittelt das Node-Konfigurationsprogramm des letzten angeschlossenen Node-Geräts 2 einer Kette 3 seine Platznummer an sein Vorgänger-Node Gerät 2 und dieses wiederum an sein Vorgänger Node-Gerät 2, etc.. Auf diese Weise erhält das Master-Gerät 1 die Platznummer des letzten Node-Geräts 2 von jeder der Ketten 3 und kennt dann die Anzahl der Node-Geräte 2 einer jeden Kette 3.

Das Master-Gerät 1 wird bei diesem Konfigurationsverfahren als Vorgänger des ersten Node-Geräts 2 einer Kette 3 behandelt. Das Konfigurationsprogramm des Master-Geräts 1 ist deshalb eingerichtet, dem ersten Node-Geräts 2 einer Kette 3 eine Platznummer zu übergeben, die dann vom Konfigurationsprogramm des ersten Node-Geräts 2 der Kette 3 um den Wert 1 erhöht wird. Die vom Master-Gerät 1 übergebene Platznummer hat beispielsweise für alle Ketten 3 den Wert 0. Die Platznummer eines jeden Node-Geräts 2 einer Kette 3 hat dann den Wert, der dem Platz des Node-Geräts 2 in der Kette 3 entspricht. D.h. das erste Node-Gerät 2 einer Kette 3 hat die Platznummer 1, das zweite Node-Gerät 2 einer Kette 3 hat die Platznummer 2, etc.. Eine solche Zuordnung von Platznummern zu den Node-Geräten 2 der Elektrofilter ist in der Fig. 1 durch Zahlen dargestellt, die in der rechten unteren Ecke der Node-Geräte 2 angeordnet sind.

Die Platznummer des Master-Geräts 1 kann aber auch für jede der Ketten 3 eine andere Platznummer sein, zum Beispiel für die erste Kette 3 die Zahl 0 und für die nachfolgenden Ketten 3 die Platznummer des letzten Node-Geräts 2 der vorhergehenden Kette 3. Auf diese Weise können die Node-Geräte 2 aller Ketten 3 durchnummeriert werden.

Das Master-Gerät 1 und die Node-Geräte 2 enthalten eines oder mehrere weitere Programme, mit denen das Master-Gerät 1 jedes Node-Gerät 2 über seine Platznummer und seine Kettennummer (oder seine alleinige Platznummer) ansprechen und Befehle und Daten mit ihm austauschen kann.

Die Elektrofilter sind in mehreren, insbesondere drei Baugrössen vorgesehen, die als 1/1, 1/2 und 3/4 Baugrösse bezeichnet werden. Die Elektrofilter enthalten mit Vorteil eine Kodierung für die Baugrösse und allenfalls weitere Parameter und die Node-Geräte 2 enthalten einen oder mehrere Sensoren, um die Kodierung des angeschlossenen Elektrofilters zu ermitteln und daraus die Baugrösse und gegebenenfalls die weiteren Parameter zu bestimmen. Die Kodierung erfolgt beispielsweise mittels zweier am Elektrofilter im Abstand zueinander angeordneter Magnete und zweier dementsprechend am Node-Gerät 2 angebrachter Magnetfeldsensoren. Das Ausgangssignal des ersten Magnetfeldsensors gibt an, ob der erste Magnet vorhanden ist. Das Ausgangssignal des zweiten Magnetfeldsensors gibt an, ob der zweite Magnet vorhanden ist. Die folgende Tabelle zeigt eine mögliche Kodierung:

| Magnet 1 | Magnet 2 | Kodierung |
|---|---|---|
| Nicht vorhanden | nicht vorhanden | kein Elektrofilter |
| Vorhanden | nicht vorhanden | 1/1 Elektrofilter |
| Nicht vorhanden | Vorhanden | 1/2 Elektrofilter |
| Vorhanden | Vorhanden | 3/4 Elektrofilter |

Die Steuerung der Ionisationsstufe der Elektrofilter erfolgt bevorzugt durch Vorgabe des Ionisationsstroms, der durch die Ionisationsstufe fliessen soll, und die Steuerung der Kollektorstufe der Elektrofilter erfolgt durch Vorgabe der Kollektorhochspannung, die an die Kollektorstufe anzulegen ist. Das Master-Gerät 1 ist vorzugsweise an ein übergeordnetes Gebäudesteuerungsgerät 4 anschliessbar oder Teil eines Gebäudesteuerungsgeräts und die Steuerelektronik ist eingerichtet, die Ionisationsströme und die Kollektorhochspannung entsprechend dem Betriebszustand der gesamten Gebäudelüftungsanlage zu steuern. Ein Beispiel dazu: Der Luftvolumenstrom kann mittels eines Ventilators eingestellt werden zwischen null und einem Maximalluftvolumenstrom. Das Gebäudesteuerungsgerät 4 kommuniziert dazu mit dem Master-Gerät 1 und übermittelt ihm ein Steuersignal, das sich auf den aktuellen Luftvolumenstrom, vorzugsweise in Prozent des Maximalluftvolumenstroms, oder eine ihm entsprechende Grösse bezieht. Das Master-Gerät 1 ist eingerichtet, das Steuersignal oder ein davon abgeleitetes Steuersignal an die Node-Geräte 2 weiterzugeben, die die Betriebsparameter des angeschlossenen Elektrofilters anhand des Steuersignals bestimmen und einstellen oder regeln. Das Master-Gerät 1 kann insbesondere eingerichtet sein, das vom Gebäudesteuerungsgerät 4 erhaltene Steuersignal, das den aktuellen Luftvolumenstrom repräsentiert, der durch einen Lüftungskanal fliesst, in dem die Elektrofilter angeordnet sind, in ein davon abgeleitetes Steuersignal umzurechnen, das den durch einen Elektrofilter der Baugrösse 1/1 fliessenden aktuellen Luftvolumenstrom repräsentiert. Die Betriebsparameter sind insbesondere der Ionisationsstrom und die Kollektorhochspannung. Der einzustellende Ionisationsstrom hängt vorzugsweise nicht nur vom aktuellen Luftvolumenstrom, sondern auch von der Baugrösse des Elektrofilters ab. Das Node-Gerät 2 bestimmt deshalb den einzustellenden Ionisationsstrom aufgrund des übermittelten Steuersignals und der aus der erfassten Kodierung bestimmten Baugrösse des angeschlossenen Elektrofilters und die einzustellende Kollektorhochspannung aufgrund des übermittelten Steuersignals allein. Das Gebäudesteuerungsgerät 4 und das Master-Gerät 1 können auch eingerichtet sein für die Übertragung von anderen oder zusätzlichen Steuerbefehlen.

Das Node-Gerät 2 kann eingerichtet sein, die Baugrösse und gegebenenfalls andere ermittelte Parameter des Elektrofilters an das zugehörige Master-Gerät 1 zu übermitteln. Diese Übermittlung kann beispielsweise im Konfigurationsmodus durch das Konfigurationsprogramm erfolgen.

Die Node-Geräte 2 können wie oben beschrieben eingerichtet sein, mittels Software festzustellen, ob ein nachfolgendes Node-Gerät 2 angeschlossen ist oder nicht. Die Node-Geräte 2 können aber auch mit Hardware Bauteilen ausgerüstet sein, die diese Aufgabe unterstützen. So können die Eingänge und Ausgänge der Node-Geräte 2 beispielsweise Logikbauteile enthalten, die dafür sorgen, dass eine zwischen zwei Node-Geräten 2 bestehende Leitung des Verbindungskabels den Binärwert "0" führt, wenn kein nachfolgendes Node-Gerät 2 angeschlossen ist, und den Binärwert "1" führt, wenn ein nachfolgendes Node-Gerät 2 angeschlossen ist.

Die Fig. 2 zeigt ein Schema einer erfindungsgemässen Steuerelektronik für die Elektrofilter einer Gebäudelüftungsanlage gemäss einem zweiten Ausführungsbeispiel. Bei diesem Ausführungsbeispiel ist für jede Kette 3 ein separates Master-Gerät 1 vorhanden. Jedes der Master-Geräte 1 wird bevorzugt von einem separaten Netzteil mit der zweiten Versorgungsspannung von im Beispiel 24 V versorgt. Die erste Versorgungsspannung von im Beispiel 12 V kann hingegen von einem einzigen, gemeinsamen Netzteil geliefert werden. Die Master-Geräte 1 sind über einen Bus miteinander verbunden. Das erste Master-Gerät 1 ist an das Gebäudesteuerungsgerät 4 anschliessbar ausgebildet.

Die Master-Geräte 1 werden bei der Durchführung des Konfigurationsverfahrens als Vorgänger des ersten Node-Geräts 2 der zugeordneten Kette 3 behandelt. Die Zuordnung der Platznummern zu den Node-Geräten 2 einer jeden der Ketten 3 erfolgt gemäss der oben anhand des ersten Ausführungsbeispiels beschriebenen Weise.

Die Master-Geräte 1 kommunizieren je einzeln, jedoch über einen gemeinsamen Bus, mit dem Gebäudesteuerungsgerät 4 oder sie kommunizieren mit einem Haupt-Master-Gerät, das mit dem Gebäudesteuerungsgerät 4 kommuniziert. Das Haupt-Master-Gerät kann das Master-Gerät 1 der ersten Kette 3 oder ein zusätzliches Master-Gerät ohne 24 V Netzteil (bzw. 230 V Netzteil) sein.

Das 24 V Netzteil (bzw. 230 V Netzteil) kann bei allen Beispielen in das Master-Gerät 1 integriert oder ein separates Bauteil sein.

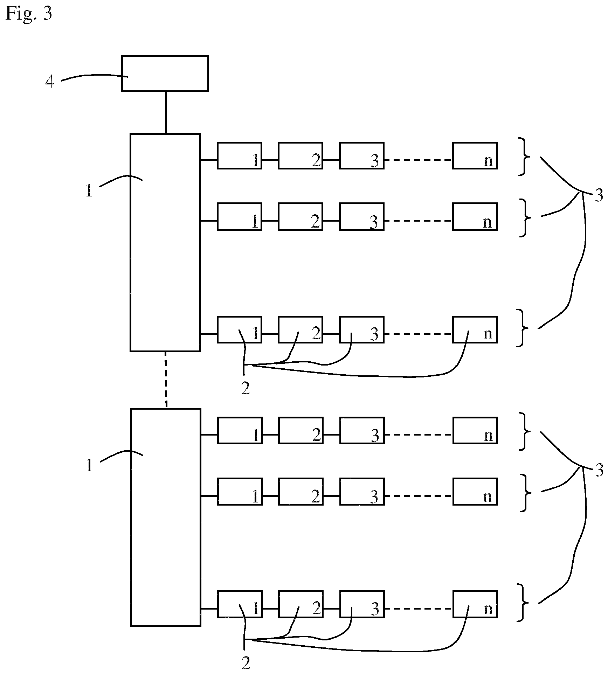

Die Fig. 3 zeigt ein Schema einer erfindungsgemässen Steuerelektronik für die Elektrofilter einer Gebäudelüftungsanlage gemäss einem dritten Ausführungsbeispiel. Bei diesem Ausführungsbeispiel sind mehrere Master-Geräte 1 vorhanden und an jedes Master-Gerät 1 sind eine oder mehrere Ketten 3 von Node-Geräten 2 anschliessbar.

Bei allen Ausführungsbeispielen können die Node-Geräte 2 einer jeden Kette 3 von 1 bis n durchnummeriert sein, wobei die Zahl n die Anzahl der Node-Geräte 2 der entsprechenden Kette bezeichnet, oder es können die Node-Geräte 2 aller Ketten 3 von 1 bis m durchnummeriert sein, wobei die Zahl m die Gesamtzahl der Node-Geräte 2 der Steuerelektronik bezeichnet, oder es können die Node-Geräte 2 aller Ketten 3, die an das gleiche Master-Gerät 1 angeschlossen sind, von 1 bis k durchnummeriert sein, wobei die Zahl k die Gesamtzahl der an das gleiche Master-Gerät 1 angeschlossenen Node-Geräte 2 bezeichnet.

Die Erfindung ermöglicht es, jedes Node-Gerät 2 und somit jeden Elektrofilter eines grossen Arrays von Elektrofiltern individuell anzusprechen und zu parametrisieren. Ein bei einem beliebigen Node-Gerät 2 bzw. Elektrofilter auftretender Fehler kann somit lokalisiert und möglicherweise selbsttätig durch entsprechende Steuerbefehle behoben werden.

Das Node-Gerät 2 versorgt den zugehörigen Elektrofilter mit der zweiten Versorgungsspannung (beispielsweise 24 V DC oder 230 V AC). Diese Versorgungsspannung wird vorzugsweise über ein galvanisches Trennglied übertragen, d.h. das Node-Gerät 2 und der zugehörige Elektrofilter sind mit Vorteil galvanisch getrennt, wie dies in der PCT Anmeldung Nr. PCT/EP2018/050093 beschrieben ist.

Während Ausführungsformen dieser Erfindung gezeigt und beschrieben wurden, ist es für den Fachmann ersichtlich, dass mehr Modifikationen als oben erwähnt möglich sind, ohne von dem erfinderischen Konzept abzuweichen. Die Erfindung ist daher nur durch die Ansprüche und deren Äquivalente beschränkt.

## Patentansprüche

1. Steuerelektronik für mehrere Elektrofilter einer Gebäudelüftungsanlage, umfassend
wenigstens ein Master-Gerät (1) und Node-Geräte (2), **wobei**
an jeden der Elektrofilter ein Node-Gerät (2) anschliessbar ist,
das bzw. jedes Master-Gerät (1) und jedes Node-Gerät (2) eine Recheneinheit aufweist,
an das Master-Gerät (1) bzw. an jedes der Master-Geräte (1) eine oder mehrere Ketten (3) von Node-Geräten (2) anschliessbar sind, wobei in jeder Kette (3) ein erstes Node-Gerät (2) an das zugehörige Master-Gerät (1) anschliessbar und die weiteren Node-Geräte (2) der Kette (3) jeweils an das Vorgänger Node-Gerät (2) anschliessbar sind, so dass die Node-Geräte (2) der Kette (3) in Serie miteinander verbunden sind, wobei das Master-Gerät (1) der Vorgänger des ersten Node-Geräts (2) der angeschlossenen Kette (3) bzw. der Vorgänger der ersten Node-Geräte (2) der angeschlossenen Ketten (3) ist,
jedem der Node-Geräte (2) einer Kette (3) eine Platznummer zugeordnet ist,
die Recheneinheit des Master-Geräts (1) bzw. der Master-Geräte (1) eingerichtet ist, in einem Konfigurationsmodus die Recheneinheit des ersten Node-Geräts (2) einer jeden angeschlossenen Kette (3) zu veranlassen, ein Konfigurationsprogramm auszuführen, das eingerichtet ist:
die Platznummer seines Vorgängers entgegenzunehmen und sich selbst die um den Wert 1 erhöhte Platznummer zuzuweisen und im Node-Gerät (2) zu speichern,
festzustellen, ob ein nachfolgendes Node-Gerät (2) angeschlossen ist, und wenn dies der Fall ist die Recheneinheit des nachfolgenden Node-Geräts (2) zu veranlassen, das Konfigurationsprogramm auszuführen.

2. Steuerelektronik nach Anspruch 1, **dadurch gekennzeichnet, dass** jedes der Node-Geräte (2) einen oder mehrere Sensoren aufweist, um eine Kodierung des angeschlossenen Elektrofilters zu ermitteln, und dass das Konfigurationsprogramm zusätzlich eingerichtet ist, aus dem Ausgangssignal des Sensors bzw. aus den Ausgangssignalen der Sensoren die Kodierung des angeschlossenen Elektrofilters zu bestimmen.

3. Steuerelektronik nach Anspruch 1 oder 2, **dadurch gekennzeichnet, dass** das Master-Gerät (1) bzw. die Master-Geräte (1) die angeschlossenen Node-Geräte (2) mit einer Versorgungsspannung für die Elektrofilter versorgen, und dass jedes der Node-Geräte (2) ein galvanisches Trennglied zur Übertragung der Versorgungsspannung vom Node-Gerät (2) an den angeschlossenen Elektrofilter aufweist.

4. Steuerelektronik nach einem der Ansprüche 1 bis 3, wobei jeder der Elektrofilter eine vorbestimmte Baugrösse hat und eine Ionisationsstufe und eine Kollektorstufe umfasst und die Steuerung von jedem der Elektrofilter durch die Vorgabe eines durch die Ionisationsstufe fliessenden Ionisationsstroms und einer an die Kollektorstufe anzulegenden Gleichhochspannung erfolgt, **dadurch gekennzeichnet, dass**
das wenigstens eine Master-Gerät (1) mit einem Gebäudesteuerungsgerät (4) verbindbar ist oder Teil eines Gebäudesteuerungsgeräts (4) ist,
das wenigstens eine Master-Gerät (1) eingerichtet ist, ein von dem Gebäudesteuerungsgerät (4) übermitteltes Steuersignal oder ein davon abgeleitetes Steuersignal an die Node-Geräte (2) zu übermitteln, und
jedes der Node-Geräte (2) eingerichtet ist, für den zugehörigen Elektrofilter den einzustellenden Ionisationsstrom aufgrund des übermittelten Steuersignals und fakultativ der Baugrösse des angeschlossenen Elektrofilters und/oder die am Kollektor anzulegende Gleichhochspannung aufgrund des übermittelten Steuersignals zu bestimmen.

5. Steuerelektronik nach Anspruch 4, **dadurch gekennzeichnet, dass** das an die Node-Geräte (2) übermittelte Steuersignal ein Mass für den aktuellen Luftvolumenstrom ist, der durch einen Lüftungskanal fliesst, in dem die Elektrofilter angeordnet sind.

## Claims

1. Electronic control system for a number of electrostatic precipitators of a building ventilation system, comprising
at least one master device (1) and node devices (2), **wherein**
to each of the electrostatic precipitators a node device (2) can be connected,
the or each master device (1), respectively, and each node device (2) has a computing unit,
one or more chains (3) of node devices (2) can be connected to the master device (1) or to each of the master devices (1), wherein in each chain (3) a first node device (2) can be connected to the associated master device (1) and the further node devices (2) of the chain (3) can each be connected to the predecessor node device (2), so that the node devices (2) of the chain (3) are connected to one another in series, the master device (1) being the predecessor of the first node device (2) of the connected chain (3) or the predecessor of the first node devices (2) of the connected chains (3), respectively,
a position number is assigned to each of the node devices (2) of a chain (3),
the computing unit of the master device (1) or the master devices (1), respectively, is configured, in a configuration mode, to cause the computing unit of the first node device (2) of each connected chain to execute a configuration program that is configured:
to receive the position number of its predecessor and to assign itself the position number increased by the value 1 and to store it in the node device (2),
to determine whether a subsequent node device (2) is connected and, if this is the case, to cause the computing unit of the subsequent node device (2) to execute the configuration program.

2. Electronic control system according to claim 1, **characterized in that** each of the node devices (2) has one or more sensors in order to detect a coding of the connected electrostatic precipitator, and **in that** the configuration program is additionally configured to determine the coding of the connected electrostatic precipitator from the output signal of the sensor or from the output signals of the sensors.

3. Electronic control system according to claim 1 or 2, **characterized in that** the master device (1) or the master devices (1), respectively, supply the connected node devices (2) with a supply voltage for the electrostatic precipitators, and **in that** each of the node devices (2) has a galvanic isolating element for transmitting the supply voltage from the node device (2) to the connected electrostatic precipitator.

4. Electronic control system according to any of claims 1 to 3, wherein each of the electrostatic precipitators has a predetermined size and comprises an ionization stage and a collector stage, and the control of each of the electrostatic precipitators is effected by presetting an ionization current flowing through the ionization stage and a DC high voltage to be applied to the collector stage, **characterized in that**
the at least one master device (1) is connectable to a building control device (4) or is part of a building control device (4),
the at least one master device (1) is configured to transmit a control signal transmitted from the building control device (4) or a control signal derived therefrom to the node devices (2), and
each of the node devices (2) is configured to determine, for the associated electrostatic precipitator, the ionisation current to be set on the basis of the transmitted control signal and, optionally, the size of the connected electrostatic precipitator and/or to determine the DC high voltage to be applied to the collector on the basis of the transmitted control signal.

5. Electronic control system according to claim 4, **characterized in that** the control signal transmitted to the node devices (2) is a measure of the current air volume flow flowing through a ventilation duct in which the electrostatic precipitators are arranged.

## Revendications

1. Système électronique de commande pour plusieurs filtres électrostatiques d'un système de ventilation d'un bâtiment, comprenant
au moins un dispositif maître (1) et des dispositifs de noeud (2), où
à chacun des filtres électrostatiques un dispositif de noeud (2) peut être connecté,
le ou chaque dispositif maître (1) et chaque dispositif de noeud (2) comprend une unité de calcul,
une ou plusieurs chaînes (3) de dispositifs de noeud (2) peuvent être connectées au dispositif maître (1) ou à chacun des dispositifs maîtres (1), un premier dispositif de noeud (2) pouvant être connecté dans chaque chaîne (3) au dispositif maître associé (1) et les autres dispositifs de noeud (2) de la chaîne (3) pouvant être connectés chacun au dispositif de noeud précédent (2), de sorte que les dispositifs de noeud (2) de la chaîne (3) sont reliés entre eux en série, le dispositif maître (1) étant respectivement le prédécesseur du premier dispositif de noeud (2) de la chaîne connectée (3) ou le prédécesseur des premiers dispositifs de noeud (2) des chaînes connectées (3),
un numéro de position est attribué à chacun des dispositifs de noeud (2) d'une chaîne (3),
l'unité de calcul du dispositif maître (1) ou des dispositifs maîtres (1), respectivement, est configurée, dans un mode de configuration, pour causer l'unité de calcul du premier dispositif de noeud (2) de chaque chaîne connectée (3) à exécuter un programme de configuration qui est configuré:
pour recevoir le numéro de position de son prédécesseur et s'attribuer le numéro de position augmenté de la valeur 1 et l'enregistrer dans le dispositif de noeud (2),
pour déterminer si un dispositif de noeud suivant (2) est connecté et, le cas échéant, faire l'unité de calcul du dispositif de noeud suivant (2) exécuter le programme de configuration.

2. Système électronique de commande selon la revendication 1, **caractérisé en ce que** chacun des dispositifs de noeud (2) comporte un ou plusieurs capteurs afin de détecter un codage du filtre électrostatique connecté, et **en ce que** le programme de configuration est en outre configuré pour déterminer le codage du filtre électrostatique connecté à partir du signal de sortie du capteur ou des signaux de sortie des capteurs.

3. Système électronique de commande selon la revendication 1 ou 2, **caractérisé en ce que** le dispositif maître (1) ou les dispositifs maîtres (1), respectivement, alimentent les dispositifs de noeud connectés (2) avec une tension d'alimentation pour les filtres électrostatiques, et **en ce que** chacun des dispositifs de noeud (2) comporte un élément isolant galvanique pour transmettre la tension d'alimentation du dispositif de noeud (2) au filtre électrostatique connecté.

4. Système électronique de commande selon l'une des revendications 1 à 3, où chacun des filtres électrostatiques a une taille prédéterminée et comprend un étage d'ionisation et un étage collecteur, et la commande de chacun des filtres électrostatiques est effectuée par préréglage d'un courant d'ionisation passant par l'étage d'ionisation et par une haute tension continue appliquée à l'étage collecteur, **caractérisé en ce que**
le au moins un dispositif maître (1) peut être connecté à un dispositif de commande de bâtiment (4) ou fait partie d'un dispositif de commande de bâtiment (4),
le au moins un dispositif maître (1) est configuré pour transmettre un signal de commande transmis par le dispositif de commande de bâtiment (4) ou un signal de commande dérivé de celui-ci aux dispositifs de noeud (2), et
chacun des dispositifs de noeud (2) est configuré pour déterminer pour le filtre électrostatique associé le courant d'ionisation à régler sur la base du signal de commande transmis et éventuellement de la taille du filtre électrostatique connecté et/ou la haute tension continue à appliquer au collecteur sur la base du signal de commande transmis.

5. Système électronique de commande selon la revendication 4, **caractérisé en ce que** le signal de commande transmis aux dispositifs de noeud (2) est une mesure du débit volumique d'air actuel circulant dans un conduit de ventilation dans lequel sont disposés les filtres électrostatiques.
